# EUROPÄISCHE PATENTSCHRIFT

(11) **EP 1 503 103 B1**
(45) Veröffentlichungstag und Bekanntmachung des Hinweises auf die Patenterteilung: **20.09.2006**
(21) Anmeldenummer: 04016645.6
(22) Anmeldetag: 15.07.2004
(51) Int. Cl.: F16F 15/131

(54) **Drehschwingungsdämpfer**
Torsional vibration damper
Amortisseur de vibrations torsionelles

(30) Priorität: 28.07.2003 DE 10334312
(43) Veröffentlichungstag der Anmeldung: 02.02.2005
(73) Patentinhaber: LuK Lamellen und Kupplungsbau Beteiligungs KG, 77815 Bühl (DE)
(72) Erfinder: Jäckel, Johann, 77830 Bühlertal (DE); Bahrmann, Christian, 77830 Bühlertal (DE)

(56) Entgegenhaltungen:
- EP-A- 0 420 830
- DE-A- 19 645 174
- DE-U- 20 022 909

## Beschreibung

Die Erfindung betrifft einen Drehschwingungsdämpfer, insbesondere ein geteiltes Schwungrad, mit wenigstens zwei entgegen dem Widerstand einer Energiespeichereinrichtung mit Hilfe einer Gleitlagereinrichtung relativ zueinander verdrehbaren Schwungmassen.

Bei herkömmlichen Drehschwingungsdämpfern ist es bauraumbedingt oft nicht zu umgehen, dass Gleitlageranordnungen mit relativ großen Durchmessern zur axialen und koaxialen Lagerung der Schwungmassen verwendet werden. Bei diesen Lagern tritt unter einer axialen Vorlast einer mit einem vorab beschriebenen Drehschwingungsdämpfer zusammenwirkenden Kupplung, insbesondere beim Betätigen der Kupplung, eine relativ große Reibung im Bereich der axialen Gleitlagerung auf. Bei im Rahmen der vorliegenden Erfindung durchgeführten Untersuchungen wurde herausgefunden, dass die relativ große Reibung bei Gleitlageranordnungen mit relativ großen Durchmessern zu einer unerwünschten Geräuschentwicklung im Betrieb führen kann.

Gleitlagerungen sind beispielsweise durch die DE 20022909 U1 vorgeschlagen worden. Bei diesem Stand der Technik besitzen die Ausgestaltungsformen gemäß den Figuren 1 und 2 die vorerwähnten Nachteile des Standes der Technik. Die Ausführungsform gemäß Figur 3 besitzt eine gattungsfremde Lagerung, da bei dieser Ausführungsform aufgrund der vorhandenen Platzverhältnisse ein radial innerhalb der Verschraubungen 9 vorgesehenes radiales Gleitlager mit kleinem Durchmesser Verwendung findet. Solche kleine, radiale Gleitlager werden auch bei den Konstruktionen gemäß der DE 19645174 A1 verwendet.

Aufgabe der Erfindung ist es daher, einen Drehschwingungsdämpfer der eingangs beschriebenen Art, insbesondere ein geteiltes Schwungrad, mit wenigstens zwei entgegen dem Widerstand einer Energiespeichereinrichtung mit Hilfe einer Gleitlagereinrichtung relativ zueinander verdrehbaren Schwungmassen, zu schaffen, der leiser arbeitet als herkömmliche Drehschwingungsdämpfer und eine hohe Lebensdauer aufweist.

Die Aufgabe ist bei einem Drehschwingungsdämpfer, insbesondere einem geteilten Schwungrad, mit wenigstens zwei entgegen dem Widerstand einer Energiespeichereinrichtung mit Hilfe einer Gleitlagereinrichtung relativ zueinander verdrehbaren Schwungmassen, dadurch gelöst, dass die Gleitlagereinrichtung eine erste Gleitlageranordnung umfasst, mittels der die Schwungmassen koaxial und verdrehbar um eine Drehachse gelagert sind, radial innerhalb der ersten Gleitlageranordnung eine zweite Gleitlageranordnung angeordnet ist, wobei radial zwischen der ersten und der zweiten Gleitlageranordnung Schrauben zur Befestigung des Drehschwingungsdämpfers an der Abtriebswelle einer Brennkraftmaschine axial durchführbar sind und zur axialen Abstützung der beiden zueinander verdrehbaren Schwungmassen die erste Gleitlageranordnung mit der zweiten Gleitlageranordnungüber einen Zwischenring gekoppelt ist. An der zweiten Gleitlageranordnung kann aufgrund des geringeren Durchmessers eine deutlich verringerte Reibung, insbesondere in axialer Richtung, eingestellt werden.

Ein bevorzugtes Ausführungsbeispiel des Drehschwingungsdämpfers ist dadurch gekennzeichnet, dass die erste Gleitlageranordnung durch einen als Adapterring ausgebildeten Zwischenring mit der zweiten Gleitlageranordnung gekoppelt ist, der einen im Wesentlichen kreisringscheibenförmigen Außenringkörper und einen im Wesentlichen kreisringscheibenförmigen Innenringkörper aufweist, der mit dem Außenringkörper verbunden ist. Über den Außenringkörper kann eine Lagerkraftkomponente, insbesondere eine Axialkraft, von der ersten Gleitlageranordnung in den Adapterring eingeleitet werden. Die eingeleitete Lagerkraftkomponente kann dann vom Innenringkörper auf die zweite Gleitlageranordnung übertragen werden.

Ein weiteres bevorzugtes Ausführungsbeispiel des Drehschwingungsdämpfers ist dadurch gekennzeichnet, dass der Innenringkörper durch mehrere Speichen einstückig mit dem Außenringkörper verbunden ist. Durch die Speichen wird eine sichere Kraftübertagung von dem Außen- auf den Innenringkörper sichergestellt. Die Zwischenräume zwischen den Speichen bieten darüber hinaus Platz zum Durchführen von Befestigungsmitteln, wie Schrauben oder Niete, mit denen eine der Schwungmassen an einer Welle, zum Beispiel der Antriebswelle einer Brennkraftmaschine, befestigbar ist.

Ein weiteres bevorzugtes Ausführungsbeispiel des Drehschwingungsdämpfers ist dadurch gekennzeichnet, dass radial außen an dem Innenringkörper mindestens eine Ausnehmung ausgebildet ist, in die ein Vorsprung eingreift, der an der zugehörigen Schwungmasse ausgebildet ist. Die Abmessungen der Ausnehmung in Umfangsrichtung sind größer als die entsprechenden Abmessungen des Vorsprungs. Dadurch entseht ein Spiel zwischen dem Vorsprung und der Ausnehmung in Umfangsrichtung. Bei Überschreiten eines vorgebbaren Drehschwingungswinkels kommt die Ausnehmung mit einer ihrer Seitenfläche an dem Vorsprung zur Anlage, der zur Geräuschdämmung vorzugsweise mit Kunststoff ummantelt ist.

Ein weiteres bevorzugtes Ausführungsbeispiel des Drehschwingungsdämpfers ist dadurch gekennzeichnet, dass der Adapterring mit einem Lagerring zusammenwirkt, der radial innen an dem Adapterring anliegt. Der Lagerring, der als Anlaufring für die zweite Gleitlageranordnung dient, bildet vorzugsweise auch die Kunststoffummantelung für den vorab beschriebenen Vorsprung, der an einer der Schwungmassen ausgebildet ist.

Ein weiteres bevorzugtes Ausführungsbeispiel des Drehschwingungsdämpfers ist dadurch gekennzeichnet, dass radial außen an dem Lagerring eine axiale Gleitfläche und/oder eine radiale Gleitfläche der zweiten Gleitlageranordnung ausgebildet ist. Die radiale Reibfläche dient dazu, den Adapterring zu zentrieren. Über die axiale Gleitfläche werden die axialen Lagerkräfte aufgenommen.

Ein weiteres bevorzugtes Ausführungsbeispiel des Drehschwingungsdämpfers ist dadurch gekennzeichnet, dass an dem Lagerring radial innen ein Bereich mit einem verkleinerten Innendurchmesser ausgebildet ist. Dieser Bereich dient dazu, die Kupplung, insbesondere die Kupplungsscheibe, bei der Montage mittels eines Zentrierdorns zu zentrieren.

Ein weiteres bevorzugtes Ausführungsbeispiel des Drehschwingungsdämpfers ist dadurch gekennzeichnet, dass die erste Gleitlageranordnung einen Nabenring umfasst, der radial außen mit einer Gleitlagerfläche ausgestattet ist. Der Nabenring nimmt die Lagerkräfte in radialer Richtung auf und ist vorzugsweise so geführt, dass er im Betreib nicht mit dem Adapterring in Kontakt kommt.

Ein weiteres bevorzugtes Ausführungsbeispiel des Drehschwingungsdämpfers ist dadurch gekennzeichnet, dass der Nabenring mehrere Durchgangslöcher zur Aufnahme von Mitteln zur Befestigung einer der Schwungmassen an einer Antriebswelle einer Brennkraftmaschine aufweist. Vorzugsweise ist eine der Schwungmassen, insbesondere die Primärschwungmasse, durch mehrere Schrauben mit der Antriebswelle eines Kraftfahrzeugmotors verschraubt. Die andere Schwungmasse, die auch als Sekundärschwungmasse bezeichnet wird, bildet vorzugsweise die Gegendruckplatte einer Kupplung, in die der vorab beschriebene Drehschwingungsdämpfer integriert ist.

Ein weiteres bevorzugtes Ausführungsbeispiel des Drehschwingungsdämpfers ist dadurch gekennzeichnet, dass der Nabenring mehrere Durchgangslöcher zur Aufnahme von Mitteln zur Befestigung des Nabenrings an einer der Schwungmassen aufweist. Der Nabenring kann beispielsweise durch Nietverbindungen an der Primärschwungmasse befestigt sein.

Bei einer Kupplung mit einer Gegendruckplatte und mit einer Kupplungsscheibe, die zwischen der Gegendruckplatte und einer Druckplatte einklemmbar ist, die relativ zu einem Kupplungsdeckel in axialer Richtung bewegbar und mit einer Getriebeeingangswelle koppelbar ist, ist die oben angegebene Aufgabe durch einen vorab beschriebenen Drehschwingungsdämpfer gelöst.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:

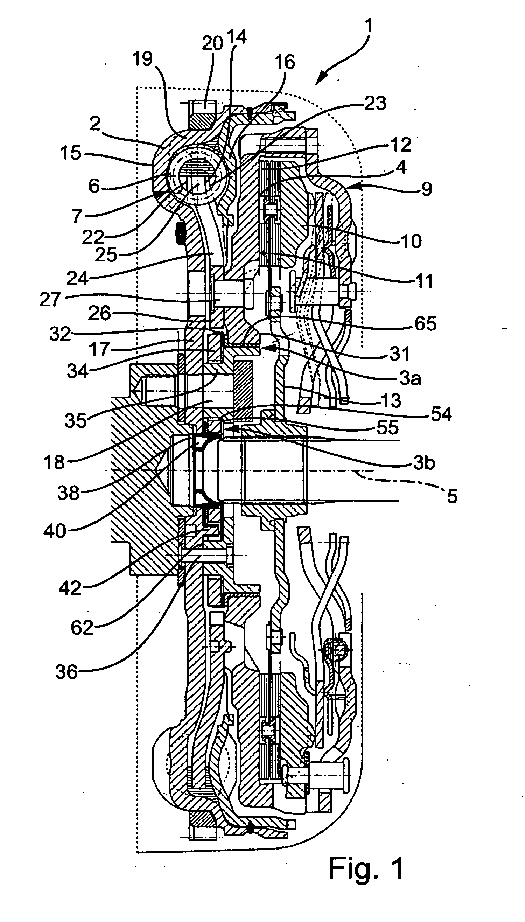

- Figur 1: einen erfindungsgemäßen Drehschwingungsdämpfer im Schnitt;

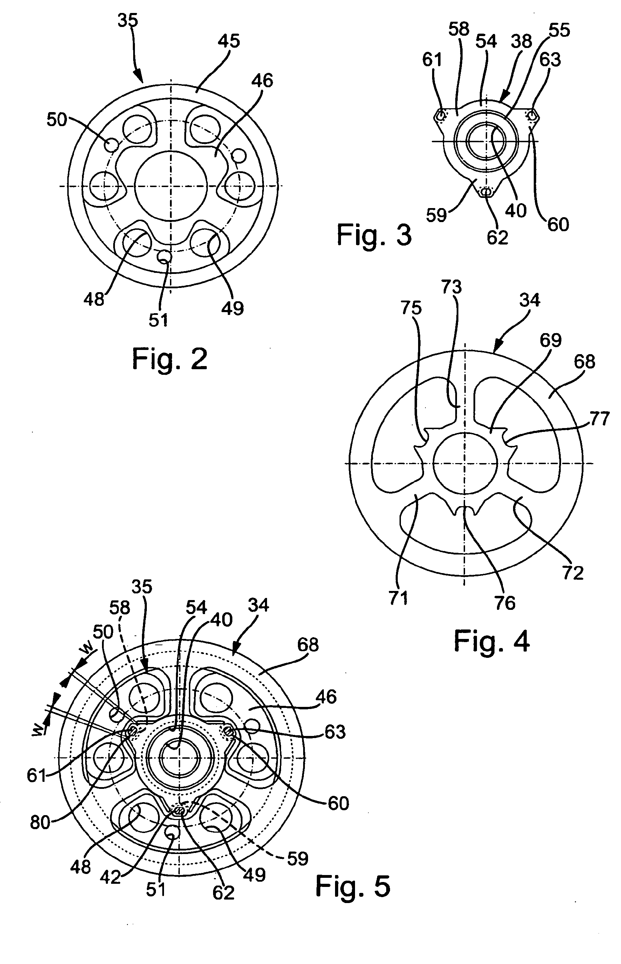

- Figur 2: einen Nabenring in der Draufsicht;
- Figur 3: einen Lagerring in der Draufsicht;
- Figur 4: einen Adapterring in der Draufsicht und
- Figur 5: einen Nabenring, einen Lagerring und einen Adapterring im zusammengebauten Zustand.

In Figur 1 ist ein Drehschwingungsdämpfer 1 dargestellt, der auch als Torsionsschwingungsdämpfer bezeichnet wird. Der Torsionsschwingungsdämpfer in Form eines Zweimassenschwungrades umfasst eine an einer Kurbelwelle einer Brennkraftmaschine eines Kraftfahrzeuges befestigbare Primärmasse 2, an der mittels einer ersten Gleitlageranordnung 3a und einer zweiten Gleitlageranordnung 3b eine Sekundärmasse 4 koaxial und verdrehbar um eine Drehachse 5 gelagert ist.

Die Primärmasse 2, die auch als primäre Schwungmasse bezeichnet wird, ist mit der Sekundärmasse 4, die auch als sekundäre Schwungmasse bezeichnet wird, über eine komprimierbare Energiespeicher 6 aufweisende Dämpfungseinrichtung 7 antriebsmäßig verbunden. Die Sekundärmasse 4 trägt eine Reibungskupplung 9. Zwischen einer Druckscheibe 10, die auch als Druckplatte bezeichnet wird, der Reibungskupplung 9 und einer Reibfläche 11 der Sekundärmasse 4, die auch als Gegendruckplatte bezeichnet wird, sind die Reibbeläge 12 einer Kupplungsscheibe 13 eingespannt.

Die Energiespeicher 6, hier in Form von in Umfangsrichtung länglichen Schraubenfedern mit großem Kompressionsweg, sind in einer Kammer 14 aufgenommen, die zumindest teilweise mit einem viskosen Medium gefüllt sein kann. Die Kammer 14 ist durch zwei aus Blech hergestellte Bauteile 15, 16 begrenzt. Das Bauteil 15 besitzt einen radial verlaufenden Bereich 17, der radial innen, mittels Schrauben 18 mit der Kurbelwelle einer Brennkraftmaschine verbindbar ist und radial außen in einen axialen Ansatz 19 übergeht, an dem das eine trennwandbildende Bauteil 16 dicht befestigt ist. Das Bauteil 15 trägt radial außen einen Anlasserzahnkranz 20.

Die Bauteile 15, 16 besitzen Abstützbereiche 22, 23 für die Energiespeicher 6. Das Ausgangsteil der drehelastischen Dämpfungseinrichtung 7 ist durch ein ring- beziehungsweise flanschförmiges Bauteil 24 gebildet, das radial außen Ausleger 25 aufweist, die sich radial zwischen den Endbereichen zweier benachbarter Energiespeicher 6 erstrecken. Bei einer Relativverdrehung zwischen dem Flanschteil 24 und der Primärmasse 2 werden die Energiespeicher 6 zwischen den Auslegern 25 und den Abstützbereichen 22, 23 komprimiert. Die radial inneren Bereiche 26 des Flansches 24 sind mittels Niete 27 mit der Sekundärmasse 4 fest verbunden.

In Figur 1 sieht man, dass die radial äußere Gleitlageranordnung 3a eine Gleitlagerbuchse 31 umfasst, die zwischen einem Nabenring 35 und der Sekundärschwungmasse 4 angeordnet ist. In axialer Richtung umfasst die Gleitlageranordnung 3a eine Kunststoffscheibe 32, die zwischen der Sekundärschwungmasse 4 und einem Zwischen- bzw. Adapterring 34 angeordnet ist. Der Adapterring 34 bildet radial innen einen Teil der inneren Gleitlageranordnung 3b. Der Nabenring 35 ist durch Nietverbindungen 36 fest mit der Primärschwungmasse 2 verbunden. Die innere Gleitlageranordnung 3b umfasst des Weiteren einen Lagerring 38. Der Lagerring 38 ist innen mit einem Zentrierdurchmesser 40 ausgestattet. Darüber hinaus sieht man in Figur 1, dass an der Primärschwungmasse 2 mindestens ein Zapfen 42 ausgebildet ist, der in eine Ausnehmung ragt, die in dem Adapterring 34 vorgesehen ist.

In Figur 2 sieht man, dass der Nabenring 35 einen radialen Stützring 45 umfasst, dessen Außenfläche die radiale Gleitlagerfläche der äußeren Gleitlageranordnung 3a bildet. Radial innen weist der Nabenring 35 einen Befestigungsflansch 46 auf, der mehrere Durchgangslöcher 48, 49 zum axialen Durchführen der Schrauben 18 (siehe Figur 1) umfasst. Außerdem umfasst der Befestigungsflansch 46 des Nabenrings 35 mehrer Durchgangslöcher 50, 51 zum Durchführen der Niete 36 (siehe Figur 1). Der Nabenring 35 befindet sich im eingebauten Zustand in Anlage an der Primärschwungmasse 2. Der Nabenring 35 hat im eingebauten Zustand keinen Kontakt zu dem Adapterring 34.

In Figur 3 sieht man, dass der Lagerring 38 radial außen eine Lagerfläche 54 aufweist, durch die der Adapterring 34 im Bereich der inneren Gleitlageranordnung 3b in axialer Richtung abgestützt wird. Die Lagerfläche 54 wird radial innen durch die Außenseite einer im Wesentlichen kreiszylindermantelförmigen Lagerfläche 55 begrenzt, die dazu dient, den Adapterring 34 im Bereich der inneren Gleitlageranordnung 3b zu zentrieren. Radial innen ist des Weiteren der Zentrierdurchmesser 40 ausgebildet, der bei der Montage dazu dient, die Kupplungsscheibe 13 (siehe Figur 1) zu zentrieren. Radial außen sind an dem Lagerring 38 drei Ansätze 58, 59, 60 ausgebildet, die jeweils mit einem Durchgangsloch 61, 62, 63 versehen sind. Die Durchgangslöcher 61 bis 63 dienen zur Aufnahme der Zapfen 42 (Siehe Figur 1). Der Lagerring 38 ist einstückig aus Kunststoff gebildet. Im Bereich des Zapfens 42 (siehe Figur 1) bildet der Lagerring 38 eine Kunststoffummantelung, durch die verhindert wird, dass der Zapfen 42 direkt mit dem Adapterring 34 in Kontakt kommt.

In Figur 4 sieht man, dass der Adapterring 34 einen im Wesentlichen kreisringscheibenförmigen Außenringkörper 68 aufweist, der koaxial zu einem im Wesentlichen kreisringscheibenförmigen Innenringkörper 69 angeordnet ist. Der Außenringkörper 68 ist durch drei Speichen 71, 72, 73, die in radialer Richtung angeordnet sind, einstückig mit dem Innenringkörper 69 verbunden. Radial außen sind an dem Innenringkörper 69 drei im Wesentlichen halbkreisförmige Ausnehmungen 75, 76, 77 ausgespart, in welche im zusammengebauten Zustand des Drehschwingungsdämpfers die Zapfen 42 ragen, die von der Primärschwungmasse 2 ausgehen.

In Figur 5 sind der Nabenring 35 aus Figur 2, der Lagerring 38 aus Figur 3 und der Adapterring 34 aus Figur 4 im zusammengebauten Zustand dargestellt. In dem Durchgangsloch 61 des Lagerrings 38 ist ein Zapfen 80 angedeutet, der von der Primärschwungmasse 2 ausgeht und in das Durchgangsloch 61 ragt. Radial außerhalb des Durchgangslochs 61 ist angedeutet, dass sich der Adapterring 34 um Winkel w, die etwa ± 2 Grad betragen, relativ zu dem Lagerring 38 und dem Nabenring 35 verdrehen kann, bevor er mit seinen Ausnehmungen 75, 76, 77 an dem zugehörigen Zapfen 80, 42 anschlägt.

Durch die vorliegende Erfindung kann die Grundreibung beziehungsweise Grundhysterese in dem in Figur 1 dargestellten Zweimassenschwungrad reduziert werden. Durch den Adapterring 34 wird die Drehbewegung der Sekundärschwungsmasse 4 von dem größeren Durchmesser der äußeren Gleitlageranordnung 3a auf den kleineren Durchmesser der inneren Gleitlageranordnung 3b übertragen. Vorzugsweise werden in beiden Gleitlageranordnungen 3a und 3b Reibpartner aus den gleichen Materialien verwendet, so dass am inneren Gleitlager 3b eine um etwa zwei Drittel verringerte Reibung eingestellt werden kann. Dieses Verhältnis der Reibungsreduzierung kann auf Grund anderer Bauraumgegebenheiten oder Forderungen auch ein anderes sein.

Da das Grundhystereseproblem nur im Leerlauf auftritt, müssen von der inneren Gleitlageranordnung 3b nur kleine Schwingwinkel realisiert werden. In Figur 5 sind die Schwingwinkel mit ± 2 Grad angegeben. Es besteht aber ohne weiteres die Möglichkeit, andere Schwingwinkel abzudecken. Bei Überschreitung des sogenannten Leerlaufschwingwinkels, inklusive einer gegebenenfalls hinzuzufügenden Sicherheit, schlägt der von dem großen Gleitlager 3a mitgeführte Adapterring 34, der auch als Adapterscheibe bezeichnet werden kann, an dem aus der Primärschwungmasse 2 herausgeprägten Zapfen 42 an, der zur Geräuschdämmung mit Kunststoff gekapselt ist. Die Kunststoffkapselung ist in den Lagerring 38 integriert, der auch als Anlaufscheibe für das kleine Gleitlager 3b bezeichnet wird. Durch den Zapfen 42 wird der Lagerring 38 sicher positioniert und am Verdrehen oder Verrutschen gehindert.

Wenn größere Schwingwinkel in dem Zweimassenschwungrad auftreten, zum Beispiel im Zug- oder Schubbetrieb, und die innere Reibung per Block außer Kraft gesetzt wurde, arbeitet nur noch das große Gleitlager 3a. Somit ist nur die große Grundreibung aktiv. Diese sorgt für eine zusätzliche Verbesserung der Torsionsschwingungsdämpfung. Durch die vorliegende Erfindung wird eine Möglichkeit zur Erzielung einer zweistufigen Grundhysterese geschaffen, die je nach Fahrzustand in der einen oder anderen Stufe zum Einsatz kommt.

## Patentansprüche

1. Drehschwingungsdämpfer, insbesondere geteiltes Schwungrad, mit wenigstens zwei entgegen dem Widerstand einer Energiespeichereinrichtung (6) mit Hilfe einer Gleitlagereinrichtung relativ zueinander verdrehbaren Schwungmassen (2, 4), wobei die Gleitlagereinrichtung eine erste Gleitlageranordnung (3a) umfasst, mittels der die Schwungmassen (2, 4) koaxial und verdrehbar um eine Drehachse (5) gelagert sind, radial innerhalb der ersten Gleitlageranordnung (3a) eine zweite Gleitlageranordnung (3b) angeordnet ist, wobei radial zwischen der ersten und der zweiten Gleitlageranordnung Schrauben (18) zur Befestigung des Drehschwingungsdämpfers an der Abtriebswelle einer Brennkraftmaschine axial durchführbar sind und zur axialen Abstützung der beiden zueinander verdrehbaren Schwungmassen (2, 4) die erste Gleitlageranordnung (3a) mit der zweiten Gleitlageranordnung (3b) über einen Zwischenring (34) gekoppelt ist.

2. Drehschwingungsdämpfer nach Anspruch 1, **dadurch gekennzeichnet, dass** die erste Gleitlageranordnung (3a) durch einen als Adapterring (34) ausgebildeten Zwischenring mit der zweiten Gleitlageranordnung (3b) gekoppelt ist, der einen im Wesentlichen kreisringscheibenförmigen Außenringkörper (68) und einen im Wesentlichen kreisringscheibenförmigen Innenringkörper (69) aufweist, der mit dem Außenringkörper (68) verbunden ist.

3. Drehschwingungsdämpfer nach Anspruch 2, **dadurch gekennzeichnet, dass** der Innenringkörper (69) durch mehrere Speichen (71, 72, 73) einstückig mit dem Außenringkörper (68) verbunden ist.

4. Drehschwingungsdämpfer nach Anspruch 2 oder 3, **dadurch gekennzeichnet, dass** radial außen an dem Innenringkörper (69) mindestens eine Ausnehmung (75, 76, 77) ausgebildet ist, in die ein Vorsprung (47) eingreift, der an der zugehörigen Schwungmasse (2) ausgebildet ist.

5. Drehschwingungsdämpfer nach einem der Ansprüche 2 bis 4, **dadurch gekennzeichnet, dass** der Adapterring (34) mit einem Lagerring (38) zusammenwirkt, der radial innen an dem Adapterring (34) anliegt.

6. Drehschwingungsdämpfer nach Anspruch 5, **dadurch gekennzeichnet, dass** radial außen an dem Lagerring (38) eine axiale Gleitfläche (54) und/oder eine radiale Gleitfläche (55) der zweiten Gleitlageranordnung (3b) ausgebildet ist.

7. Drehschwingungsdämpfer nach Anspruch 5 oder 6, **dadurch gekennzeichnet, dass** an dem Lagerring (38) radial innen ein Bereich mit einem verkleinerten Innendurchmesser (40) ausgebildet ist.

8. Drehschwingungsdämpfer nach einem der vorhergehenden Ansprüche, **dadurch gekennzeichnet, dass** die erste Gleitlageranordnung (3a) einen Nabenring (35) umfasst, der radial außen mit einer Gleitlagerfläche (65) ausgestattet ist.

9. Drehschwingungsdämpfer nach Anspruch 8, **dadurch gekennzeichnet, dass** der Nabenring (35) mehrere Durchgangslöcher (48, 49) zur Aufnahme von Mitteln (18) zur Befestigung einer der Schwungmassen (2) an einer Antriebswelle einer Brennkraftmaschine aufweist.

10. Drehschwingungsdämpfer nach Anspruch 8 oder 9, **dadurch gekennzeichnet, dass** der Nabenring (35) mehrere Durchgangslöcher (50, 51) zur Aufnahme von Mitteln (36) zur Befestigung des Nabenrings (35) an einer der Schwungmassen (2) aufweist.

11. Kupplung mit einer Gegendruckplatte (4) und mit einer Kupplungsscheibe (13), die zwischen der Gegendruckplatte (4) und einer Druckplatte (10) einklemmbar ist, die relativ zu einem Kupplungsdeckel in axialer Richtung bewegbar und mit einer Getriebeeingangswelle koppelbar ist, **gekennzeichnet durch** einen Drehschwingungsdämpfer nach einem der vorhergehenden Ansprüche.

## Claims

1. A torsional vibration damper, in particular a divided flywheel, having at least two centrifugal masses (2, 4) that are pivotable relative to each other against the resistance of an energy storage device (6) with the help of a plain bearing device, where the plain bearing device includes a first plain bearing arrangement (3a) by means of which the centrifugal masses (2, 4) are supported coaxially and rotatably around an axis of rotation (5), there being a second plain bearing arrangement (3b) positioned radially inside of the first plain bearing arrangement (3a), where screws (18) can be passed through radially between the first and the second plain bearing arrangement to attach the torsional vibration damper to the driven shaft of a combustion engine, and the first plain bearing arrangement (3a) is coupled with the second plain bearing arrangement (3b) through a spacing ring (34) to axially support the two centrifugal masses (2, 4), which are pivotable toward each other.

2. A torsional vibration damper according to Claim 1,
**characterized in that** the first plain bearing arrangement (3a) is coupled through a spacing ring in the form of an adapter ring (34) with the second plain bearing arrangement (3b), which has an essentially circular ring-wheel shaped outer ring body and an essentially circular ring-wheel shaped inner ring body which is connected to the outer ring body (68).

3. A torsional vibration damper according to Claim 2,
**characterized in that** the inner ring body (69) is joined with the outer ring body (68) in a single piece by a plurality of spokes (71, 72, 73).

4. A torsional vibration damper according to Claim 2 or 3,
**characterized in that** radially on the outside of the inner ring body (69) at least one recess (75, 76, 77) is formed, which is engaged by a projection (47) that is formed on the associated centrifugal mass (2).

5. A torsional vibration damper according to one of Claims 2 to 4,
**characterized in that** the adapter ring (34) interacts with a bearing ring (38) which is in contact radially on the inside of the adapter ring (34).

6. A torsional vibration damper according to Claim 5,
**characterized in that** an axial sliding surface (54) and/or a radial sliding surface (55) of the second plain bearing arrangement (3b) is formed radially on the outside of the bearing ring (38).

7. A torsional vibration damper according to Claim 5 or 6,
**characterized in that** a zone with a reduced inner diameter (40) is formed radially on the inside of the bearing ring (38).

8. A torsional vibration damper according to one of the preceding claims,
**characterized in that** the first plain bearing arrangement (3a) includes a hub ring (35) which is equipped with a sliding bearing surface (65) radially on its outside.

9. A torsional vibration damper according to Claim 8,
**characterized in that** the hub ring (35) has a plurality of through holes (48, 49) for receiving means (18) of attaching one of the centrifugal masses (2) to a drive shaft of a combustion engine.

10. A torsional vibration damper according to Claim 8 or 9,
**characterized in that** the hub ring (35) has a plurality of through holes (50, 51) for receiving means (36) of attaching the hub ring (35) to one of the centrifugal masses (2).

11. A clutch having a counterpressure plate (4), and having a clutch disk (13) that is clampable between the counter pressure plate (4) and a pressure plate (10) which is movable in an axial direction relative to a clutch cover and which may be coupled with a transmission input shaft,
**characterized by** a torsional vibration damper according to one of the preceding claims.

## Revendications

1. Amortisseur d'oscillations tournantes, en particulier volant moteur divisé, comprenant au moins deux masses d'inertie (2, 4) pouvant être en rotation l'une par rapport à l'autre, à l'aide d'un dispositif à paliers lisses, en s'opposant à la résistance d'un dispositif à accumulateurs d'énergie (6), où le dispositif à paliers lisses comprend un premier dispositif à paliers lisses (3a), au moyen duquel les masses d'inertie (2, 4) sont logées de façon coaxiale et peuvent tourner autour d'un axe de rotation (5), un deuxième dispositif à paliers lisses (3b) est disposé radialement à l'intérieur du premier dispositif à paliers lisses (3a), où des vis (18), servant à la fixation de l'amortisseur d'oscillations tournantes sur l'arbre de sortie d'un moteur à combustion interne, peuvent traverser axialement, de façon radiale entre les premier et deuxième dispositifs à paliers lisses, et, pour l'appui axial des deux masses d'inertie (2, 4) pouvant tourner l'une par rapport à l'autre, le premier dispositif à paliers lisses (3a) est couplé au deuxième dispositif à paliers lisses (3b), par une bague intermédiaire (34).

2. Amortisseur d'oscillations tournantes selon la revendication 1, **caractérisé en ce que** le premier dispositif à paliers lisses (3a) est couplé au deuxième dispositif à paliers lisses (3b), par une bague intermédiaire conçue comme une bague d'adaptation (34) qui présente un corps de bague extérieure (68) pratiquement en forme de rondelle en anneau de cercle et un corps de bague intérieure (69), pratiquement en forme de rondelle en anneau de cercle, qui est relié au corps de bague extérieure (68).

3. Amortisseur d'oscillations tournantes selon la revendication 2, **caractérisé en ce que** le corps de bague intérieure (69) est relié, en formant une seule et même pièce, au corps de bague extérieure (68), par plusieurs rayons (71, 72, 73).

4. Amortisseur d'oscillations tournantes selon la revendication 2 ou 3, **caractérisé en ce qu'**au moins un creux (75, 76, 77) est formé, extérieurement dans le sens radial, sur le corps de bague intérieure (69), creux dans lequel s'engage une partie saillante (47) qui est réalisée sur la masse d'inertie associée (2).

5. Amortisseur d'oscillations tournantes selon l'une quelconque des revendications 2 à 4, **caractérisé en ce que** la bague d'adaptation (34) fonctionne en association avec une bague de roulement (38) qui vient en appui sur la bague d'adaptation (34), intérieurement dans le sens radial.

6. Amortisseur d'oscillations tournantes selon la revendication 5, **caractérisé en ce qu'**une surface axiale de glissement (54) et/ou une surface radiale de glissement (55) du deuxième dispositif à paliers lisses (3b) est formée sur la bague de roulement (38), extérieurement dans le sens radial.

7. Amortisseur d'oscillations tournantes selon la revendication 5 ou 6, **caractérisé en ce qu'**une zone ayant un diamètre intérieur réduit (40) est formée sur la bague de roulement (38), intérieurement dans le sens radial.

8. Amortisseur d'oscillations tournantes selon l'une quelconque des revendications précédentes, **caractérisé en ce que** le premier dispositif à paliers lisses (3a) comprend une bague de moyeu (35) qui est dotée d'une surface de palier lisse (65), extérieurement dans le sens radial.

9. Amortisseur d'oscillations tournantes selon la revendication 8, **caractérisé en ce que** la bague de moyeu (35) présente plusieurs trous traversants (48, 49) servant au logement de moyens (18) prévus pour la fixation de l'une des masses d'inertie (2) sur un arbre d'entraînement d'un moteur à combustion interne.

10. Amortisseur d'oscillations tournantes selon la revendication 8 ou 9, **caractérisé en ce que** la bague de moyeu (35) présente plusieurs trous traversants (50, 51) servant au logement de moyens (36) prévus pour la fixation de la bague de moyeu (35) sur l'une des masses d'inertie (2).

11. Embrayage comprenant un plateau de contre-pression (4) et un disque d'embrayage (13) qui peut être pris entre le plateau de contre-pression (4) et un plateau de pression (10) qui est mobile, dans la direction axiale, par rapport à un plateau de fermeture d'embrayage et peut être couplé à un arbre d'entrée de boîte de vitesses, **caractérisé par** un amortisseur d'oscillations tournantes selon l'une quelconque des revendications précédentes.
